# EUROPEAN PATENT APPLICATION

(11) **EP 4 815 379 A1**
(43) Date of publication of application: **30.09.2026**
(21) Application number: 25166333.2
(22) Date of filing: 26.03.2025
(51) Int. Cl.: H04L 12/40, H04L 12/46, G06F 13/40, H04L 67/2871, H04L 12/10

(54) **AUTOMOTIVE AUDIO BUS, A2B, BRIDGE CIRCUIT**

(71) Applicant: Harman Becker Automotive Systems, Inc., Novi, MI 48377 (US)
(72) Inventor: CHEN, Zhijun, 215-0023 Kawasaki-shi (JP); DOBOS, Viktor, 6000 Kecskemét (HU); KARDOS, Péter Atilla, 1162 Budapest (HU)
(74) Representative: Rummler, Felix

(57) **Abstract**

A bridge circuit for data transfer. The bridge circuit includes a first physical input/output (I/O) port for an automotive audio bus (A2B) of a first version, and a first I/O interface coupled to the first physical I/O port for the A2B of the first version. The bridge circuit includes a second physical I/O port for an A2B of a second version, wherein the second version has a different physical layer and a different bandwidth to the first version. The bridge circuit includes a second I/O interface coupled to the second physical I/O port for the A2B of the second version, and the second I/O interface coupled to the first I/O interface via one or more data channels. The first I/O interface is operable to receive data from a first device connected to the first I/O port, and to transmit the data via the one or more data channels to the second I/O interface. The second I/O interface is operable to send the data to a second device connected to the second I/O port.

## Description

The present invention relates to a bridge circuit for data transfer, a vehicle, and a method of coupling an automotive audio bus (A2B) of a first version with an A2B of a second version as in the claims below.

### BACKGROUND OF THE INVENTION

The Automotive Audio Bus (A2B) is a bus for infotainment systems in the automotive industry (i.e., in-vehicle infotainment systems). A2B enables multiple useful applications in in-vehicle infotainment systems. Some example applications include speech recognition and active noise cancellation.
A2B is typically a single-master, multiple-slave system in which a transceiver chip on a host controller is the master (although, multiple-master, multiple slave systems are possible as well). The transceiver chip on the host controller generates clock, synchronization and framing SYNCs for all slave nodes. The master A2B chip can be configured via the control bus (I2C, also known as Inter IC Bus). An extension of this control bus is embedded in the A2B data stream and allows direct access of registers and status information of the slave transceiver as well as I2C-to-I2C communication.

An A2B bus provides HI-FI audio while increasing fuel efficiency of vehicles thanks to a 75% reduction in cabling weight. A2B connects multiple remote sensors for different applications in a daisy-chain sequence, significantly reducing redundant cabling runs. As a result, harness weight is dramatically reduced while overall design cost and complexity are reduced due to the need for fewer cables. A2B technology can also power other devices in the series connection, eliminating the need for local power supplies and further reducing overall system costs.

Analog Devices' A2B bus has become the mainstream of digital audio network. However, current A2B solutions are below the quickly evolving audio market trend. Current implementations of A2B utilise a version 1.0 layer of A2B. However, future versions of A2B which have different physical layers and also a different bandwidth to version 1.0 of A2B. Accordingly, current A2B versions (i.e. version 1.0) are incompatible and cannot co-exist with an infrastructure of A2B of a future version. Thus, replacing any one component within an in-vehicle infotainment system from A2B version 1 to a future version requires that all components are replaced with the future version to ensure compatibility. With the large number of sensors, loudspeakers and other slave devices within in-vehicle infotainment systems, this can lead to a very costly upgrade. With the development and implementation of A2B devices (for example, host devices and/or slave devices) of future versions, there is a demand to create an infrastructure that enables A2B devices of different versions to communicate with one another.

### SUMMARY

To achieve the above objectives, the invention sets out a bridge circuit for data transfer, a vehicle, and a method of coupling an automotive audio bus (A2B) of a first version with an A2B of a second version as in the claims below.

In a preferred embodiment, a bridge circuit for data transfer is provided. The bridge circuit includes a first physical input/output (I/O) port for an automotive audio bus (A2B) of a first version and a first I/O interface coupled to the first physical I/O port for the A2B of the first version. The bridge circuit includes a second physical I/O port for an A2B of a second version, wherein the second version has a different physical layer and a different bandwidth to the first version. The bridge circuit includes a second I/O interface coupled to the second physical I/O port for the A2B of the second version, and the second I/O interface coupled to the first I/O interface via one or more data channels. The first I/O interface is operable to receive data from a first device connected to the first I/O port, and to transmit the data via the one or more data channels to the second I/O interface. The second I/O interface is operable to send the data to a second device connected to the second I/O port.

Advantageously, master devices and slave devices with of different A2B versions can be coupled to one another such that a device (for example a master or a slave device) of A2B version 1 can communicate with another device (for example, a slave or a master device) of A2B in a different version. In other words, a device using an A2B version 1 may be compatible with another device using an A2B of a different version. Accordingly, future versions of A2B which have different physical layers and also a different bandwidth to version 1.0 of A2B can co-exist and communicate with each other. Moreover, original equipment manufacturers (OEMs) can continue to use existing devices (such as sensors and/or other slave devices) that are compliant with A2B version 1 while also employing future versions of master devices (for example, master electronic control units (ECUs), in-vehicle infotainment systems (IVI), etc.). Advantageously, vehicle infotainment systems can be upgraded in a modular/flexible manner by upgrading some components from A2B version 1 to a future version of A2B and by ensuring that other A2B version 1components can be re-used. This can significantly reduce the cost to OEMs. This significantly reduces engineering costs and improves the re-use rate of already existing A2B version 1 components/devices while still allowing room for upgrade.

In an embodiment, the second I/O interface is operable to receive data from the second device connected to the second I/O port, and to transmit the data via the one or more data channels to the first I/O interface. The first I/O interface may be operable to send the data to the first device connected to the first I/O port.

Advantageously, a bridge device is provided that ensures bi-directional connections between an A2B device of version 1 to A2B of a higher version or between an A2B device of a higher version to an A2B device of version 1. By utilising A2B of a higher version, higher transfer speed and more bandwidth can be achieved.

In an embodiment, the data includes stream data and control data. Advantageously, both audio/video data can be sent between A2B version 1 and future version devices as well as control data (for example, to control registries of sensors or other slave devices).

In an embodiment, the one or more data channels include a first data channel operable to transmit and receive stream data. The first I/O interface may perform time division multiplexing (TDM) before transmitting the stream data to the second I/O interface via the first data channel. Alternatively or additionally, the second I/O interface may perform TDM before transmitting the stream data to the first I/O interface via the first data channel.

Advantageously, the physical encoding differences between A2B version 1 and A2B of future versions can be matched to ensure seamless communication of stream data (for example, audio/video data) between devices of A2B version 1 and A2B devices of future versions.

In an embodiment, the one or more data channels include a second data channel coupled to the first I/O interface and to the second I/O interface and operable to send and receive control data between the first I/O interface and the second I/O interface, wherein the second data channel is an inter integrated circuit (IC) bus (I2C). Alternatively or additionally, the one or more data channels include a third data channel coupled to a serial peripheral interface (SPI) of the first I/O interface and to an SPI of the second I/O interface, the third data channel operable to send and receive control data between the first I/O interface and the second I/O interface. Alternatively or additionally, the one or more data channels include a fourth data channel coupled to a general purpose input output (GPIO) of the first I/O interface and to a GPIO of the second I/O interface, the fourth data channel operable to send and receive control data between the first I/O interface and the second I/O interface

Advantageously, seamless and compatible functionality is ensured for control data (for example, to adjust or control the registries of sensors or other slave devices) between devices of A2B version 1 and A2B devices of future versions.

In an embodiment, the bridge circuit further includes a memory (for example, an electrically erasable programmable read-only memory, EEPROM) coupled to the second data channel, the memory operable to store data.

Advantageously, useful information or instructions (such as storing parts numbers of the bridge, components within the bridge, diagnostic results, etc.) can be stored in the bridge. This can ensure reliability of the bridge during troubleshooting.

In an embodiment, the bridge circuit includes one or more connectors operable to receive power from a power supply, wherein the one or more connectors are coupled to the first I/O interface and the second I/O interface and are operable to provide power to the first I/O interface and the second I/O interface.

Advantageously, the bridge can be powered separately and does not require a power source. This significantly reduces manufacturing costs and reduces real-estate on the bridge circuit.

In an embodiment, the first I/O interface is operable to receive power from the first device. Alternatively or additionally, the first I/O interface is operable to receive power from the second device. Alternatively or additionally, the second I/O interface is operable to receive power from the first device. Alternatively or additionally, the second I/O interface is operable to receive power from the second device.

Advantageously, the bridge circuit can be powered by a master device (of A2B version 1 or any other version) while providing power to a slave device (of A2B version 1 or any other version). Similarly, the bridge circuit can be powered by a slave device (of A2B version 1 or any other version) and provide power to a master device (of A2B version 1 or any other version). Thus, the bridge circuit is versatile and can be adapted to function within multiple different types of in-vehicle infotainment systems.

In a preferred embodiment, an audio system is provided. The audio system includes the bridge circuit as described above. The audio system further includes a master computer coupled to the first physical I/O port. The master computer includes memory and a processor.

Advantageously, a sound system (such as an in-vehicle infotainment system) is provided in which master devices and slave devices with of different A2B versions can be coupled to one another such that a device (for example a master or a slave device) of A2B version 1 can communicate with another device (for example, a slave or a master device) of A2B in a different version. In other words, a device using an A2B version 1 may be compatible with another device using an A2B of a different version. Accordingly, future versions of A2B which have different physical layers and also a different bandwidth to version 1.0 of A2B can co-exist and communicate with each other. Moreover, original equipment manufacturers (OEMs) can continue to use existing devices (such as sensors and/or other slave devices) that are compliant with A2B version 1 while also employing future versions of master devices (for example, master electronic control units (ECUs), in-vehicle infotainment systems (IVI), etc.). Advantageously, vehicle infotainment systems can be upgraded in a modular/flexible manner by upgrading some components from A2B version 1 to a future version of A2B and by ensuring that other A2B version 1components can be re-used. This can significantly reduce the cost to OEMs. This significantly reduces engineering costs and improves the re-use rate of already existing A2B version 1 components/devices while still allowing room for upgrade.

In an embodiment, the system further includes one or more slave devices coupled to the second physical I/O port.

In an embodiment, the one or more slave devices include one or more of; a sensor (for example, microphone, touch sensor, light sensor, proximity sensor, etc.), an amplifier, a playback device (for example, a driver, a loudspeaker, a video playback device, a light or array of lights, etc.). a computer (for example, including a processor, an electronic control unit (ECU), etc.), or a haptic feedback device. Advantageously, the compatibility can be provided to a plurality of different types of slave devices

In an embodiment, the processor of the master computer is operable to detect the bridge circuit, detect the one or more slave devices, and configure the one or more slave devices via the bridge circuit. The processor of the master computer is further operable to send one or more instructions to the one or more slave devices via the bridge circuit, and to receive one or more signals from the one or more slave devices via the bridge circuit.

Advantageously, the functionality of an A2B system between one or more master devices and one or more slave devices can be maintained despite utilising different versions of A2B. The one or more master device(s) can continue to configure the registries of the one or more slave devices, irrespective of the different versions of A2B in the system.

In a preferred embodiment, a vehicle is provided. The vehicle includes the system as described above. Advantageously, a vehicle is provided in which master devices and slave devices with of different A2B versions can be coupled to one another such that a device (for example a master or a slave device) of A2B version 1 can communicate with another device (for example, a slave or a master device) of A2B in a different version. In other words, a device using an A2B version 1 may be compatible with another device using an A2B of a different version. Accordingly, future versions of A2B which have different physical layers and also a different bandwidth to version 1.0 of A2B can co-exist and communicate with each other. Moreover, original equipment manufacturers (OEMs) can continue to use existing devices (such as sensors and/or other slave devices) that are compliant with A2B version 1 while also employing future versions of master devices (for example, master electronic control units (ECUs), in-vehicle infotainment systems (IVI), etc.). Advantageously, vehicle infotainment systems can be upgraded in a modular/flexible manner by upgrading some components from A2B version 1 to a future version of A2B and by ensuring that other A2B version 1components can be re-used. This can significantly reduce the cost to OEMs. This significantly reduces engineering costs and improves the re-use rate of already existing A2B version 1 components/devices while still allowing room for upgrade.

In a preferred embodiment, a method of coupling an automotive audio bus (A2B) of a first version with an A2B of a second version, wherein the second version has a different physical layer and a different bandwidth to the first version is provided. The method includes receiving, at a first input/output (I/O) interface of a bridge circuit, data from a first device, the first device connected to a first physical I/O port of the bridge circuit and the first physical I/O port is coupled to the first I/O interface, wherein the first I/O port and the first I/O interface are for an A2B of the first version. The method further includes transmitting the data to a second I/O interface, the second I/O interface is for an A2B of the second version, wherein the data is transmitted via one or more data channels between the first I/O interface and the second I/O interface. The method further includes sending the data from the second I/O interface to a second device via a second physical I/O port, the second physical I/O port coupled to the second I/O interface and the second device, wherein the second physical I/O port is for an A2B of the second version.

Advantageously, a method is provided in which master devices and slave devices with of different A2B versions can be coupled to one another such that a device (for example a master or a slave device) of A2B version 1 can communicate with another device (for example, a slave or a master device) of A2B in a different version. In other words, a device using an A2B version 1 may be compatible with another device using an A2B of a different version. Accordingly, future versions of A2B which have different physical layers and also a different bandwidth to version 1.0 of A2B can co-exist and communicate with each other. Moreover, original equipment manufacturers (OEMs) can continue to use existing devices (such as sensors and/or other slave devices) that are compliant with A2B version 1 while also employing future versions of master devices (for example, master electronic control units (ECUs), in-vehicle infotainment systems (IVI), etc.). Advantageously, vehicle infotainment systems can be upgraded in a modular/flexible manner by upgrading some components from A2B version 1 to a future version of A2B and by ensuring that other A2B version 1components can be re-used. This can significantly reduce the cost to OEMs. This significantly reduces engineering costs and improves the re-use rate of already existing A2B version 1 components/devices while still allowing room for upgrade.

In an embodiment, the method further includes receiving, at the second I/O interface of the bridge circuit, data from the second device. The method may further include transmitting the data to the first I/O interface, wherein the data is transmitted via the one or more data channels between the first I/O interface and the second I/O interface. The method may further include sending the data from the first I/O interface to the first device via the first physical I/O port.

Advantageously, bi-directional connections between an A2B device of version 1 to A2B of a higher version or between an A2B device of a higher version to an A2B device of version 1 is ensured. By utilising A2B of a higher version, higher transfer speed and more bandwidth can be achieved.

### BRIEF DESCRIPTION OF THE DRAWINGS

The features, objects, and advantages of the present disclosure will become more apparent from the detailed description set forth below when taken in conjunction with the drawings in which like reference numerals refer to similar elements.
Figure 1 illustrates a bridge circuit for data transfer, according to the invention;
Figure 2 illustrates example arrangements of input/output ports of the bridge circuit of figure 1;
Figure 3 illustrates an example system comprising a bridge circuit coupled to a plurality of automotive audio bus (A2B) components;
Figure 4 illustrates a further example system comprising a bridge circuit coupled to a plurality of automotive audio bus (A2B) components;
Figure 5 illustrates a vehicle comprising the bridge circuit of figures 1 to 4, according to the invention; and
Figure 6 depicts a flow chart of a method of coupling an automotive audio bus (A2B) of a first version with an A2B of a second version, according to the invention.

### DETAILED DESCRIPTION

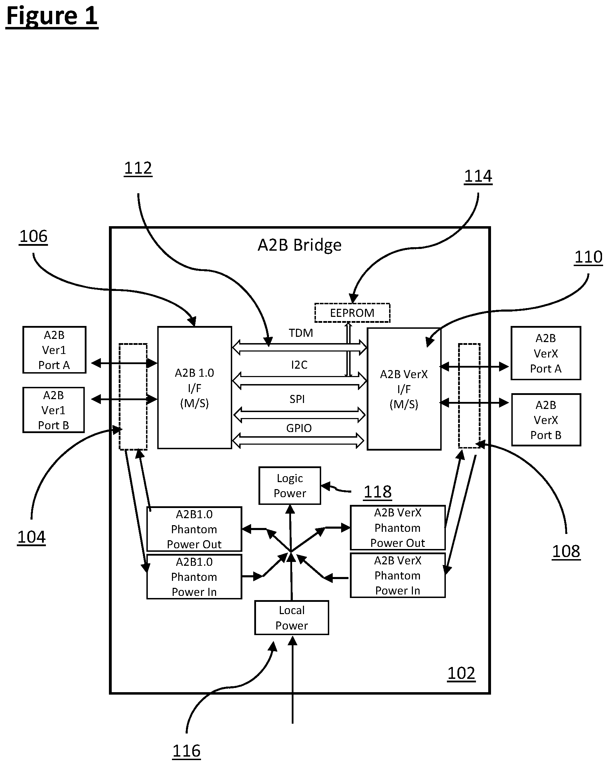

Figure 1 illustrates a bridge circuit 102 for data transfer between a plurality of devices (for example, one or more master devices and one or more slave devices as described herein). The bridge circuit 102 includes a first physical input/output (I/O) port 104 for an automotive audio bus (A2B) of a first version and a first I/O interface 106 coupled (for example, by means of an electrical connection) to the first physical I/O port for the A2B of the first version. The bridge circuit 102 includes a second physical I/O port 108 for an A2B of a second version, wherein the second version has a different physical layer (for example, a different physical layer of an OSI model) and a different bandwidth to the first version. The bridge circuit 102 includes a second I/O interface 110 coupled (for example, by means of an electrical connection) to the second physical I/O port 108 for the A2B of the second version. The bridge circuit 102 includes one or more data channels 112 between the first I/O interface 106 and the second I/O interface 110. The one or more data channels 112 are electrically the first I/O interface 106 and to the second I/O interface 110.

The first and second physical I/O ports may each include one or more external connectors. The one or more external connectors may be coupled to one or more devices (for example, one or more master devices and/or one or more slave devices) by means of a wired or a wireless connection. Accordingly, the bridge circuit 102 may receive inputs from one or more input devices (for example, at the first I/O port 104, or the second I/O port 108), repurpose the inputs received from the one or more devices (for example, with the one or more data channels 112), and transfer the repurposed received inputs to one or more output devices (for example, at the second I/O port 108, or the first I/O port 104).

A2B of the first version may be A2B version 1.0 or any derivative of version 1 (for example, but not limited to, version 1.5). A2B of the second version may be a higher version to A2B of the first version. Similarly, A2B of the second version may be A2B version 1.0 or any derivative of version 1 (for example, but not limited to, version 1.5). A2B of the first version may be a higher version to A2B of the second version.

The first I/O interface 106 is operable to receive data (for example, stream data and/or control data) from a first device (for example, a master device or a slave device) connected to the first I/O port 104, and to transmit the data via the one or more data channels 112 to the second I/O interface 110. The second I/O interface 110 is operable to send the data to a second device (for example, a slave device or a master device) connected to the second I/O interface 110 via the second I/O port 108.

Advantageously, master devices and slave devices with of different A2B versions can be coupled to one another such that a device (for example a master or a slave device) of A2B version 1 can communicate with another device (for example, a slave or a master device) of A2B in a different version. In other words, a device using an A2B version 1 may be compatible with another device using an A2B of a different version. Accordingly, future versions of A2B which have different physical layers and also a different bandwidth to version 1.0 of A2B can co-exist and communicate with each other. Moreover, original equipment manufacturers (OEMs) can continue to use existing devices (such as sensors and/or other slave devices) that are compliant with A2B version 1 while also employing future versions of master devices (for example, master electronic control units (ECUs), in-vehicle infotainment systems (IVI), etc.). Advantageously, vehicle infotainment systems can be upgraded in a modular/flexible manner by upgrading some components from A2B version 1 to a future version of A2B and by ensuring that other A2B version 1components can be re-used. This can significantly reduce the cost to OEMs. This significantly reduces engineering costs and improves the re-use rate of already existing A2B version 1 components/devices while still allowing room for upgrade.

In an embodiment, the second I/O interface 110 may also receive data from the second device connected to the second I/O port 108. The second I/O interface 110 may transmit the data via the one or more data channels 112 to the first I/O interface 106. The first I/O interface 106 may be operable to send the data to the first device connected to the first I/O port 104.

Advantageously, a bridge device is provided that ensures bi-directional connections between an A2B device of version 1 to A2B of a higher version or between an A2B device of a higher version to an A2B device of version 1. By utilising A2B of a higher version, higher transfer speed and more bandwidth can be achieved.

In an embodiment, the data may include stream data and control data. The stream data may be audio data, video data, alphanumeric data, metadata or any combination thereof. The control data may include one or more instructions (for example, one or more operational instructions) for the one or more devices coupled to the bridge circuit 102. For example, the control data may include registry control data for one or more slave devices connected to the second I/O port 108 of the bridge circuit 102. Advantageously, both audio/video data can be sent between A2B version 1 and future version devices as well as control data (for example, to control registries of sensors or other slave devices).

In an embodiment, the one or more data channels 112 include a first data channel operable to transmit and receive the stream data. The first I/O interface 106 may perform time division multiplexing (TDM) before transmitting the stream data to the second I/O interface 110 via the first data channel. Alternatively or additionally, the second I/O interface 110 may perform TDM before transmitting the stream data to the first I/O interface 106 via the first data channel 112. The TDM may include time division in multiple different numbers of slots. For example, this may include 2 slots, 4 slots, 8 slots, 16 slots, 32 slots, 64 slots, or 128 slots.

Advantageously, the physical encoding differences between A2B version 1 and A2B of future versions can be matched to ensure seamless communication of stream data (for example, audio/video data) between devices of A2B version 1 and A2B devices of future versions.

In an embodiment, the one or more data channels include one or more channels to send and receive the control data between the first I/O interface 106 and the second I/O interface 110. The one or more data channels may include a second data channel coupled to the first I/O interface 106 and to the second I/O interface 110 and operable to send and receive the control data between the first I/O interface 106 and the second I/O interface 110. The second data channel may be an inter integrated circuit (IC) bus (I2C). Alternatively or additionally, the one or more data channels include a third data channel coupled to a serial peripheral interface (SPI) of the first I/O interface and to an SPI of the second I/O interface 110, the third data channel operable to send and receive control data between the first I/O interface 106 and the second I/O interface 110. Alternatively or additionally, the one or more data channels include a fourth data channel coupled to a general purpose input output (GPIO) of the first I/O interface 106 and to a GPIO of the second I/O interface 110, the fourth data channel operable to send and receive control data between the first I/O interface 106 and the second I/O interface 110.

Advantageously, seamless and compatible functionality is ensured for control data (for example, to adjust or control the registries of sensors or other slave devices) between devices of A2B version 1 and A2B devices of future versions.

In an embodiment, the bridge circuit further includes a memory 114 (for example, an electrically erasable programmable read-only memory, EEPROM) coupled to the second data channel, the memory 114 may be operable to store data (for example, one or more parts numbers of the bridge circuit 102, one or more parts numbers of each of the components within the bridge, diagnostic information received from the one or more devices coupled to the bridge, etc.). Advantageously, useful information or instructions (such as storing parts numbers of the bridge, components within the bridge, diagnostic results, etc.) can be stored in the bridge. This can ensure reliability of the bridge during troubleshooting.

In an embodiment, the bridge circuit includes one or more connectors operable to receive power from a power supply (for example, from a vehicle, an ECU of the vehicle or similar). The one or more connectors may be coupled to the first I/O interface 106 and to the second I/O interface 110 and are operable to provide power to the first I/O interface 106 and the second I/O interface 110. In an embodiment, the first I/O port 104 may include one or more of the connectors operable to receive power (power connector). In an embodiment, the second I/O port 108 may include one or more of the connectors operable to receive power (power connector). In an embodiment, In an embodiment, both the first I/O port 104 and the second I/O port 108 may each include one or more of the connectors operable to receive power (power connector). In an embodiment, the one or more power connectors may be separate to the first I/O port 104 and the second I/O port 108.

Advantageously, the bridge can be powered separately and does not require a power source. This significantly reduces manufacturing costs and reduces real-estate on the bridge circuit.

The bridge circuit 102 may be powered by a local power supply (for example, from a vehicle, an ECU of the vehicle or similar). The bridge circuit 102 may be powered by the one or more devices coupled to the bridge circuit (i.e., the bridge circuit 102 may be powered phantom power). For example, the bridge circuit 102 may be powered by a master device (for example, a computer for an in-vehicle infotainment system) or it may be powered by one or more slave devices. Accordingly, in an embodiment, the first I/O interface 106 is operable to receive power from the first device. Alternatively or additionally, the first I/O interface 106 is operable to receive power from the second device.

The bridge circuit 102 may provide power (either the local power or the phantom power) to the one or more devices connected to the bridge circuit 102. Accordingly, in an embodiment, the second I/O interface 110 is operable to receive power from the first device. Alternatively or additionally, the second I/O interface 110 is operable to receive power from the second device. The bridge circuit 102 may receive only local power, only phantom power, or a combination of local and phantom power.

Advantageously, the bridge circuit can be powered by a master device (of A2B version 1 or any other version) while providing power to a slave device (of A2B version 1 or any other version). Similarly, the bridge circuit can be powered by a slave device (of A2B version 1 or any other version) and provide power to a master device (of A2B version 1 or any other version). Thus, the bridge circuit is versatile and can be adapted to function within multiple different types of in-vehicle infotainment systems.

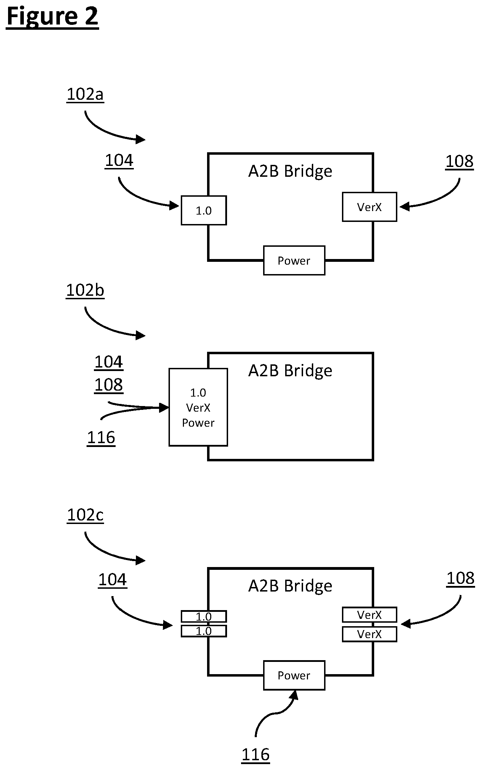

Figure 2 depicts example arrangements of input/output ports of the bridge circuit 102 of figure 1. The bridge circuit 102 may include one first I/O port 104 and one second I/O port 108 as depicted in example 102a. In example 102a, the bridge circuit may include a separate port (power connector) to receive local power, phantom power, or a combination of local and phantom power.

The bridge circuit 102 may include a single port that combines the first I/O port 104 the second I/O port 108 and the separate port (power connector) to receive local power, phantom power, or a combination of local and phantom power as depicted in example 102b.

The bridge circuit 102 may include a plurality of first I/O ports 104 a plurality of second I/O ports 108 and a separate port (power connector) to receive local power, phantom power, or a combination of local and phantom power, as depicted in example 102c.

Each of the first I/O port 104, the second I/O port 108, and the separate port to receive power (power connector) may include one or more inputs and/or outputs.

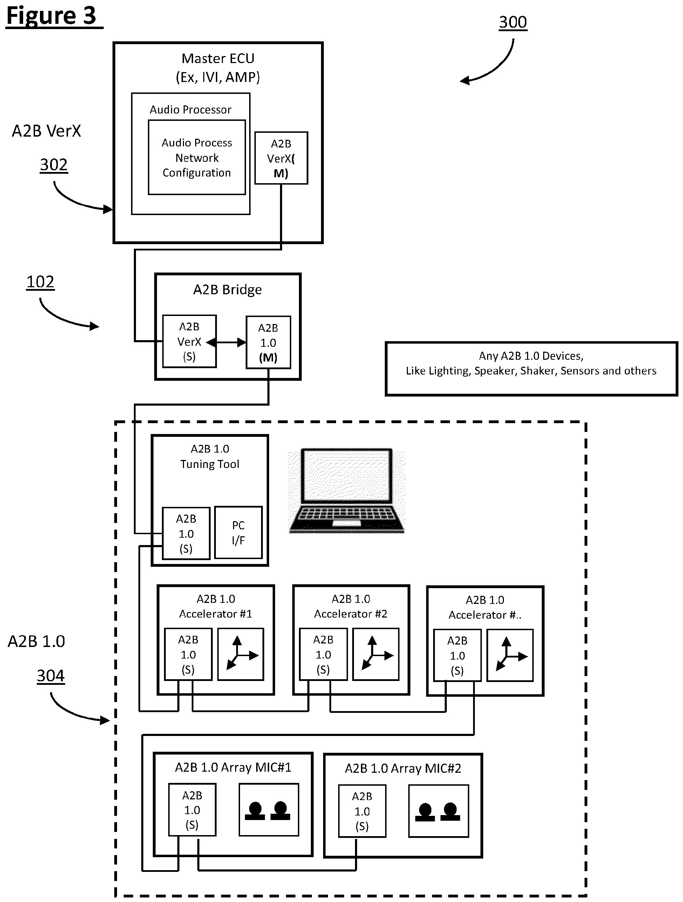

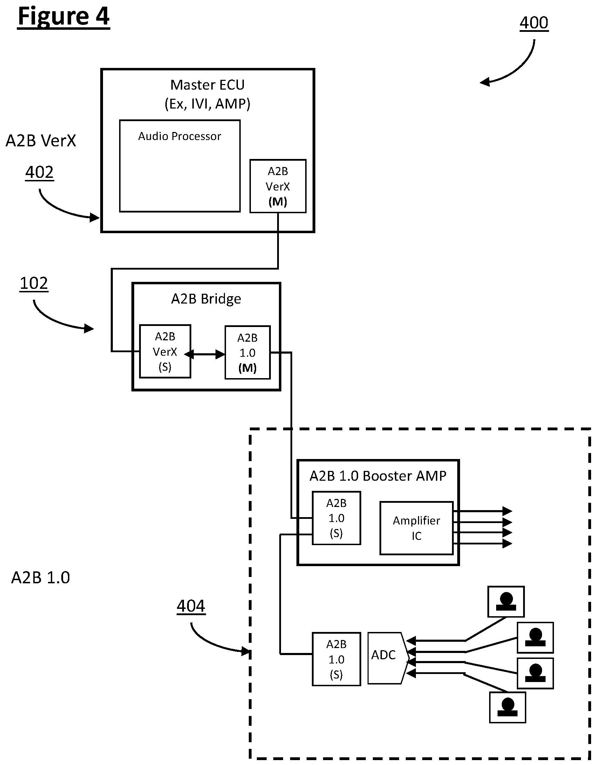

Figures 3 and 4 illustrates a system 300 and 400, respectively. The systems 300, 400 comprise the bridge circuit 102 described above in figures 1 and 2 coupled (via a wired or wireless connection) to a plurality of automotive audio bus (A2B) devices. The system 300, 400 may be an audio system, such as an in-vehicle infotainment system.

The plurality of A2B devices may include a master device which may be a master computer 302, 402 coupled to the first physical I/O port 104 of the bridge circuit 102. The master computer may be an ECU, an in-vehicle infotainment system, an amplifier or similar. The master computer 302, 402 may include memory and a processor. The processor may be an audio processor including an audio process network configuration. The master computer 302, 402 may include an A2B I/O port coupled to the processor and coupled to the first physical I/O port 104 of the bridge circuit (via a wired or wireless connection).

The plurality of A2B devices may include one or more slave devices 304, 404 coupled to the second physical I/O port 108 by means of a wired or wireless connection. Advantageously, a sound system (such as an in-vehicle infotainment system) is provided in which master devices and slave devices with of different A2B versions can be coupled to one another such that a device (for example a master or a slave device) of A2B version 1 can communicate with another device (for example, a slave or a master device) of A2B in a different version. In other words, a device using an A2B version 1 may be compatible with another device using an A2B of a different version. Accordingly, future versions of A2B which have different physical layers and also a different bandwidth to version 1.0 of A2B can co-exist and communicate with each other. Moreover, original equipment manufacturers (OEMs) can continue to use existing devices (such as sensors and/or other slave devices) that are compliant with A2B version 1 while also employing future versions of master devices (for example, master electronic control units (ECUs), in-vehicle infotainment systems (IVI), etc.). Advantageously, vehicle infotainment systems can be upgraded in a modular/flexible manner by upgrading some components from A2B version 1 to a future version of A2B and by ensuring that other A2B version 1components can be re-used. This can significantly reduce the cost to OEMs. This significantly reduces engineering costs and improves the re-use rate of already existing A2B version 1 components/devices while still allowing room for upgrade.

In an embodiment, each of the one or more slave devices 304, 404 may be a sensor (for example, microphone, touch sensor, light sensor, proximity sensor, etc.), an amplifier, a playback device (for example, a driver, a loudspeaker, a video playback device, a light or array of lights, etc.). a computer (for example, including a processor, an electronic control unit (ECU), operable to perform tuning for the one or more slave devices 304, 404, etc.), or a haptic feedback device (for example, a shaker). Advantageously, the compatibility can be provided to a plurality of different types of slave devices. Each of the plurality of slave devices 304, 404 may include one or more registries operable to receive control data (as described above) from the master computer 302, 402 (via the bridge circuit). Accordingly, each of the slave devices 304, 404 may be set and/or programmed specifically according to the control data set by the master computer 302, 402. Each of the one or more slave devices 304, 404 may include an A2B I/O port coupled to the second physical I/O port 108 of the bridge circuit 102 (via a wired or wireless connection).

As shown in figure 4, the system 400 may be an amplifier. The master device 402 may be a master computer 402 as described above. The one or more slave devices 404 nay include one or more analog-to-digital converters (ADCs), one or more boost amplifiers, or a combination thereof.

In an embodiment, the processor of the master computer 302, 402 is operable to detect the bridge circuit 102. The processor of the master computer 302, 402 is operable to detect the one or more slave devices 304, 404, and to configure the one or more slave devices 304, 404 via the bridge circuit 102 (for example, by sending control data). The processor of the master computer is further operable to send one or more instructions to the one or more slave devices 304, 404 via the bridge circuit (for example, by sending control data), and to receive one or more signals from the one or more slave devices via the bridge circuit (for example, including diagnostic information, and/or stream data).

Advantageously, the functionality of an A2B system between one or more master devices and one or more slave devices can be maintained despite utilising different versions of A2B. The one or more master device(s) can continue to configure the registries of the one or more slave devices, irrespective of the different versions of A2B in the system.

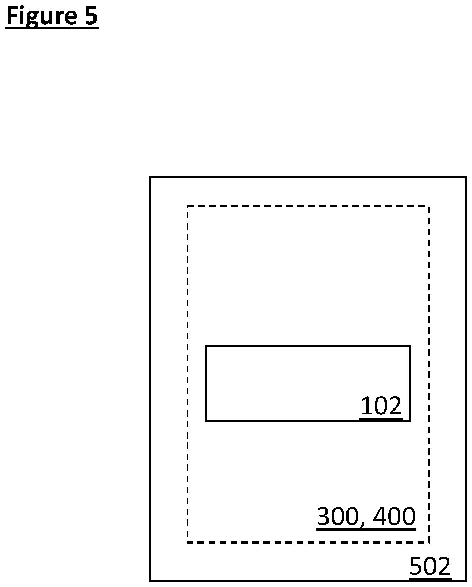

Figure 5 illustrates a vehicle 502 comprising the bridge circuit 102 as described in figures 1 to 4. The vehicle 502 may be an automobile, a lorry, a motorcycle, a bicycle, or any other type of land-borne vehicle. The vehicle 502 may be an aeroplane, helicopter, drone or any other type of air- or space-borne vehicle. The vehicle 502 may be a boat, a ship, or any other type of vehicle suitable for travel in water. The vehicle 502 may include the bridge circuit 102 as described in figures 1 to 4. The vehicle 502 may include the system 300 or the system 400 as described in figures 3 and 4, respectively.

Advantageously, a vehicle is provided in which master devices and slave devices with of different A2B versions can be coupled to one another such that a device (for example a master or a slave device) of A2B version 1 can communicate with another device (for example, a slave or a master device) of A2B in a different version. In other words, a device using an A2B version 1 may be compatible with another device using an A2B of a different version. Accordingly, future versions of A2B which have different physical layers and also a different bandwidth to version 1.0 of A2B can co-exist and communicate with each other. Moreover, original equipment manufacturers (OEMs) can continue to use existing devices (such as sensors and/or other slave devices) that are compliant with A2B version 1 while also employing future versions of master devices (for example, master electronic control units (ECUs), in-vehicle infotainment systems (IVI), etc.). Advantageously, vehicle infotainment systems can be upgraded in a modular/flexible manner by upgrading some components from A2B version 1 to a future version of A2B and by ensuring that other A2B version 1components can be re-used. This can significantly reduce the cost to OEMs. This significantly reduces engineering costs and improves the re-use rate of already existing A2B version 1 components/devices while still allowing room for upgrade.

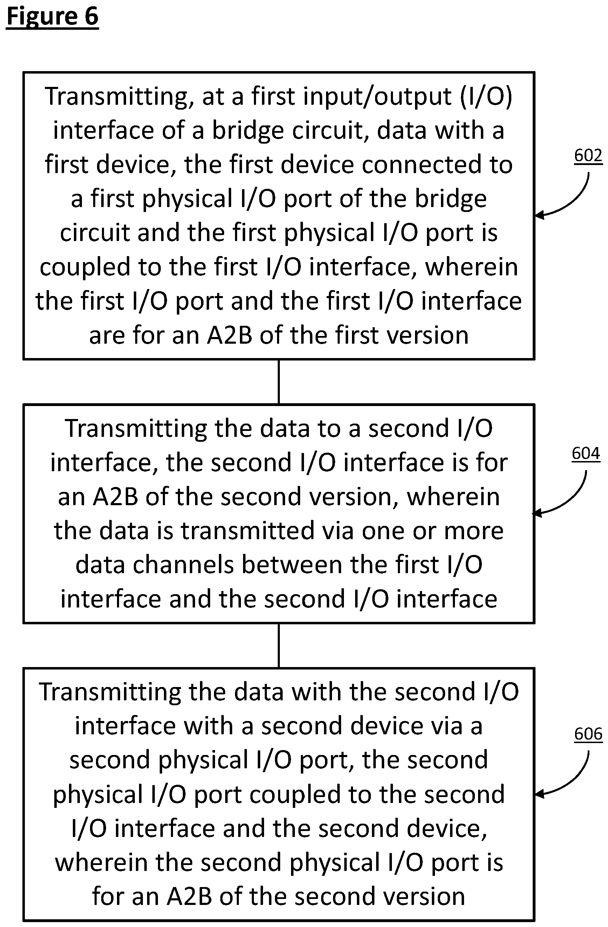

Figure 6 depicts a flow chart of a method 600 of coupling an automotive audio bus (A2B) of a first version with an A2B of a second version, wherein the second version has a different physical layer and a different bandwidth to the first version as described in figures 1 to 5 above.

The method 600 at 602 includes transmitting (for example, receiving and/or sending), with (i.e. from and/or to) a first input/output (I/O) interface 106 of a bridge circuit 102, data with (i.e., from and/or to) a first device, the first device connected to a first physical I/O port 104 of the bridge circuit 102 and the first physical I/O port 104 is coupled to the first I/O interface 106, wherein the first I/O port 104 and the first I/O interface 106 are for an A2B of the first version. At 604 the method includes transmitting the data to a second I/O interface 110, the second I/O interface 110 is for an A2B of the second version, wherein the data is transmitted via one or more data channels 112 between the first I/O interface 106 and the second I/O interface 110. At 606, the method includes transmitting (for example sending and/or receiving) the data with (i.e., from and/or to) the second I/O interface 110 with (i.e., from and/or to) a second device via a second physical I/O port 108, the second physical I/O port 108 coupled to the second I/O interface 110 and the second device, wherein the second physical I/O port 108 is for an A2B of the second version.

Advantageously, a method is provided in which master devices and slave devices with of different A2B versions can be coupled to one another such that a device (for example a master or a slave device) of A2B version 1 can communicate with another device (for example, a slave or a master device) of A2B in a different version. In other words, a device using an A2B version 1 may be compatible with another device using an A2B of a different version. Accordingly, future versions of A2B which have different physical layers and also a different bandwidth to version 1.0 of A2B can co-exist and communicate with each other. Moreover, original equipment manufacturers (OEMs) can continue to use existing devices (such as sensors and/or other slave devices) that are compliant with A2B version 1 while also employing future versions of master devices (for example, master electronic control units (ECUs), in-vehicle infotainment systems (IVI), etc.). Advantageously, vehicle infotainment systems can be upgraded in a modular/flexible manner by upgrading some components from A2B version 1 to a future version of A2B and by ensuring that other A2B version 1components can be re-used. This can significantly reduce the cost to OEMs. This significantly reduces engineering costs and improves the re-use rate of already existing A2B version 1 components/devices while still allowing room for upgrade.

The method may further include transmitting (i.e., receiving and/or sending), with (i.e., at) the second I/O interface 110 of the bridge circuit 102, data with (i.e., from and/or to) the second device. The method may further include transmitting the data to the first I/O interface 106, wherein the data is transmitted via the one or more data channels 112 between the first I/O interface 106 and the second I/O interface 110. The method may further include transmitting (i.e., sending and/or receiving) the data with (i.e., from and/or to) the first I/O interface 106 to the first device via the first physical I/O port 104. As referred herein, the first device may include the master computer 302, 402 and the second device may include the one or more slave devices 304, 404. Alternatively, the second device may include the master computer 302, 402 and the first device may include the one or more slave devices 304, 404.

Advantageously, bi-directional connections between an A2B device of version 1 to A2B of a higher version or between an A2B device of a higher version to an A2B device of version 1 is ensured. By utilising A2B of a higher version, higher transfer speed and more bandwidth can be achieved.

## Claims

1. A bridge circuit for data transfer, the bridge circuit comprising:
a first physical input/output (I/O) port for an automotive audio bus (A2B) of a first version;
a first I/O interface coupled to the first physical I/O port for the A2B of the first version;
a second physical I/O port for an A2B of a second version, wherein the second version has a different physical layer and a different bandwidth to the first version;
a second I/O interface coupled to the second physical I/O port for the A2B of the second version, and the second I/O interface coupled to the first I/O interface via one or more data channels; and
wherein:
the first I/O interface is operable to receive data from a first device connected to the first I/O port, and to transmit the data via the one or more data channels to the second I/O interface, and
the second I/O interface is operable to send the data to a second device connected to the second I/O port.

2. The bridge circuit of claim 1, wherein:
the second I/O interface is operable to receive data from the second device connected to the second I/O port, and to transmit the data via the one or more data channels to the first I/O interface; and
the first I/O interface is operable to send the data to the first device connected to the first I/O port.

3. The bridge circuit of claims 1 or 2, wherein the data comprises:
stream data; and
control data.

4. The bridge circuit of claim 3, wherein the one or more data channels comprise a first data channel operable to transmit and receive stream data, wherein:
the first I/O interface performs time division multiplexing (TDM) before transmitting the stream data to the second I/O interface via the first data channel;
the second I/O interface performs TDM before transmitting the stream data to the first I/O interface via the first data channel; or
a combination of the above.

5. The bridge circuit of claims 3 or 4, wherein the one or more data channels comprises one or more of:
a second data channel coupled to the first I/O interface and to the second I/O interface and operable to send and receive control data between the first I/O interface and the second I/O interface, wherein the second data channel is an inter integrated circuit (IC) bus (I2C);
a third data channel coupled to a serial peripheral interface (SPI) of the first I/O interface and to an SPI of the second I/O interface, the third data channel operable to send and receive control data between the first I/O interface and the second I/O interface; or
a fourth data channel coupled to a general purpose input output (GPIO) of the first I/O interface and to a GPIO of the second I/O interface, the fourth data channel operable to send and receive control data between the first I/O interface and the second I/O interface

6. The bridge circuit of claim 5, further comprising a memory coupled to the second data channel, the memory operable to store data.

7. The bridge circuit of any one of claims 1 to 6, comprising one or more connectors operable to receive power from a power supply, wherein the one or more connectors are coupled to the first I/O interface and the second I/O interface and are operable to provide power to the first I/O interface and the second I/O interface.

8. The bridge circuit of any one of claims 1 to 7, wherein:
the first I/O interface is operable to receive power from the first device;
the first I/O interface is operable to receive power from the second device;
the second I/O interface is operable to receive power from the first device;
the second I/O interface is operable to receive power from the second device; or
any combination of the above.

9. An audio system comprising:
the bridge circuit of any of claims 1 to 8; and
a master computer (e.g., ECU, IVI, AMP, etc.) coupled to the first physical I/O port, the master computer comprising:
memory, and
a processor.

10. The system of claim 9, further comprising one or more slave devices coupled to the second physical I/O port.

11. The system of claim 10, wherein the one or more slave devices comprise one or more of;
a sensor (e.g., microphone, touch sensor, light sensor, proximity sensor, etc.); an amplifier;
a playback device (driver, loudspeaker, video, light, etc.);
a computer/processor/ECU; or
a haptic feedback device.

12. The system of claim 11, wherein the processor of the master computer is operable to:
detect the bridge circuit;
detect the one or more slave devices;
configure the one or more slave devices (e.g., registries) via the bridge circuit;
send one or more instructions to the one or more slave devices (e.g., how to operate) via the bridge circuit; and
receive one or more signals from the one or more slave devices via the bridge circuit.

13. A vehicle comprising the system of any one of claims 9 to 12.

14. A method of coupling an automotive audio bus (A2B) of a first version with an A2B of a second version, wherein the second version has a different physical layer and a different bandwidth to the first version, the method comprising:
receiving, at a first input/output (I/O) interface of a bridge circuit, data from a first device, the first device connected to a first physical I/O port of the bridge circuit and the first physical I/O port is coupled to the first I/O interface, wherein the first I/O port and the first I/O interface are for an A2B of the first version;
transmitting the data to a second I/O interface, the second I/O interface is for an A2B of the second version, wherein the data is transmitted via one or more data channels between the first I/O interface and the second I/O interface; and
sending the data from the second I/O interface to a second device via a second physical I/O port, the second physical I/O port coupled to the second I/O interface and the second device, wherein the second physical I/O port is for an A2B of the second version.

15. The method of claim 14, further comprising:
receiving, at the second I/O interface of the bridge circuit, data from the second device;
transmitting the data to the first I/O interface, wherein the data is transmitted via the one or more data channels between the first I/O interface and the second I/O interface; and
sending the data from the first I/O interface to the first device via the first physical I/O port.
